# EUROPÄISCHE PATENTSCHRIFT

(11) **EP 2 946 050 B1**
(45) Veröffentlichungstag und Bekanntmachung des Hinweises auf die Patenterteilung: **16.01.2019**
(21) Anmeldenummer: 14701319.7
(22) Anmeldetag: 17.01.2014
(51) Int. Cl.: H01F 38/14, G07C 9/00, H02J 50/10, H02J 50/05, H02J 50/90, H04B 5/00, E05D 11/00, E05B 47/00

(54) **VORRICHTUNG ZUR DRAHTLOSEN ÜBERTRAGUNG ELEKTRISCHER LEISTUNG**
DEVICE FOR THE WIRELESS TRANSMISSION OF ELECTRICAL POWER
DISPOSITIF DE TRANSMISSION SANS FIL D'UNE PUISSANCE ÉLECTRIQUE

(30) Priorität: 17.01.2013 AT 342013
(43) Veröffentlichungstag der Anmeldung: 25.11.2015
(73) Patentinhaber: Baumann/Holding/1886 GmbH, 4320 Perg (AT)
(72) Erfinder: BAUMANN, Franz, A-4342 Perg (AT); WÖRAN, Wolfgang, A-4341 Baumgartenberg (AT); ZEITLHOFER, Markus, A-4343 Mitterkirchen (AT); STRAUß, Reinhard, A-4320 Perg (AT); BRANDSTÄTTER, Reinhard, A-4303 St. Pantaleon (AT); FORSTNER, Gerhard, A-8786 Rottenmann (AT); TRAXLER, Martin, A-4400 Steyr (AT); GSCHAIDER, Michael, A-2763 Muggendorf (AT)
(74) Vertreter: Puchberger & Partner Patentanwälte
(86) Internationale Anmeldenummer: PCT/EP2014/050872
(87) Internationale Veröffentlichungsnummer: WO 2014/111502

(56) Entgegenhaltungen:
- DE-A1- 10 059 582
- DE-A1- 10 118 656
- DE-A1-102004 028 595
- DE-A1-102011 050 342
- US-A1- 2012 153 894
- US-A1- 2012 299 391

## Beschreibung

Die Erfindung betrifft eine Vorrichtung zur drahtlosen Übertragung von elektrischer Leistung und elektrischen Signalen umfassend eine an einer mechanischen Struktur, insbesondere in einem Gehäuse oder einem Verkleidungsteil angebrachte erste elektrische Komponente.

Moderne Schließanlagen verfügen in der Regel über elektrisch angetriebene Motorschlösser, die sich im beweglichen Teil eines abschließbaren Elements (beispielsweise Türblatt oder Fensterflügel oder dergleichen) befindet. Die Übertragung von elektrischer Energie und Steuersignalen zwischen einer fix montierten ersten elektrischen Komponente und dem sich im beweglichen Teil befindlichen mechatronischen Schließsystem erfolgt üblicherweise über elektrische Leitungen sowie galvanische Kontakte. Diese Kontakte sind in der Regel als Stecker oder als Schleifkontakte ausgeführt. Hierbei tritt das Problem auf, dass die Herstellung einer verlässlichen Verbindung zwischen den Steckern oder Schleifkontakten zur Daten- und/oder Energieübertragung mehrere Nachteile mit sich trägt.

Die notwendigen elektrischen Leitungen müssen aufwendig aus dem fixen Element, beispielsweise dem Türstock, über eine frei verlegte Kabelverbindung in das Profil des beweglichen Elements, beispielsweise des Türblatts und weiter zum Schließsystem geleitet werden. Hierbei tritt bei der Verwendung von Steckkontakten das Problem auf, dass die Herstellung einer Verbindung zur Energie- und Datenübertragung von einer gebäudeseitigen Steuer- und Versorgungseinheit zu einem türseitigen mechatronischen Schließsystem einen erheblichen Montageaufwand verursacht.

Die herkömmliche technische Umsetzung erfordert das Vorhandensein eines entsprechenden Aluminium- oder Holzprofils am Türblatt. Sollte das Türblatt ohne Profil vorgesehen sein, so ist dieser bekannte technische Lösungsansatz nicht anwendbar. Durch scharfe Kanten an den Ecken des beweglichen Elements wird das Einziehen der Kabel zusätzlich erschwert, wodurch ein Aufscheuern der Isolatorhülle des Kabels verursacht werden kann. Eine schadhafte Isolation der Kabelverbindungen kann zu elektrischen Kurzschlüssen führen, welche die Funktionsweise des Schließsystems massiv beeinträchtigen.

Weiters sind die Kabel an Stellen, an denen es zu Bewegungen kommt, besonders hohen mechanischen Anforderungen ausgesetzt, welche über kurz oder lang zu einem Kabelbruch führen können. Bei der Beaufschlagung mit elektrischer Spannung derartig beeinträchtigter Kabel oder Kontakte besteht ein wesentliches Sicherheitsrisiko (Gefahr eines Stromschlages).

Für bewegliche Elemente, welche in Bereichen positioniert sind, in denen Umwelteinflüsse, insbesondere Feuchtigkeit, Schmutz sowie diverse Öle oder Fette schadhaft auf die Kabel- und Steckkontakte einwirken können, ergibt sich zudem die Problematik der Korrosion der Steckkontakte. Diese kann Kontaktschwierigkeiten hervorrufen, welche von einem Fehlverhalten bis hin zum Totalausfall des Schließsystems führen können.

Weiters sind frei verlegte Kabelverbindungen vom fixen Element zum beweglichen Element aufgrund der beeinträchtigen Optik vom Endkunden nicht erwünscht. Die derzeit handelsübliche Lösung mit Stößelkontakten zur Energieübertragung birgt wie oben erwähnt den großen Nachteil der offenen Kontaktflächen, die durch Auftreten der Korrosion zur Beeinträchtigung bzw. zu Ausfällen des Schließsystems führen kann.

Aus dem Stand der Technik, siehe beispielsweise Patentschrift DE 101 18 656 A1, DE 100 59 582 A1, DE 10 2011 050 342 A1 und US 2012 0153 894 A1, ist es bekannt, zur Übertragung elektrischer Leistung induktiv oder kapazitiv gekoppelte Übertragungsvorrichtungen mit elektrischen Komponenten, die Spulen oder Kondensatoren beinhalten, zu verwenden.

Eine derartige elektromagnetische Kopplung funktioniert jedoch nur über sehr geringe Distanzen zuverlässig. Darüber hinaus sind für das Betätigen mechanischer Schließvorrichtungen zum Teil beträchtliche Kräfte erforderlich, welche nur bedingt durch eine kapazitive oder induktive Kopplung übertragen werden können.

Als großes Problem derartiger Übertragungsmodule hat sich in der Praxis herausgestellt, dass der Abstand zwischen dem elektromagnetischen Sender und dem Empfänger möglichst gering sein muss, um eine hohe übertragbare Leistung sicherzustellen. Dies ist jedoch bei den erfindungsgemäßen Vorrichtungen (Schließsystemen von Türen, Fenstern und dergleichen) nicht gegeben, da diese beträchtliche Schwankungen im Abstand (Spaltmaß) zwischen dem beweglichen und dem fix montierten Teil aufweisen. Dies ist insbesondere aufgrund von Temperaturschwankungen und herstellungsbedingten Toleranzen der Fall. Darüber hinaus sollten Sender und Empfänger stets genau gegenüberliegen, um eine möglichst gute Übertragung zu gewährleisten.

Ein weiteres Problem bei der Anwendung derartiger Vorrichtungen in Schließanlagen besteht jedoch darin, dass die Lage bzw. Position der Übertragungsvorrichtungen nicht mit Sicherheit kontrolliert werden kann. Aufgrund von Abnutzung, Verschmutzung oder Manipulation kann es vorkommen, dass die Betätigungsmittel die elektrischen Komponenten in eine suboptimale Lage versetzen. Dadurch verschlechtert sich die elektromagnetische Kopplung. Auch kann die momentane Position und der momentane Zustand der Komponenten nur schwer festgestellt werden.

Aus dem Stand der Technik sind Vorrichtungen bekannt, die Spulenarrays verwenden, wobei bei der Übertragung das Spulenpaar mit der besten Kopplung ausgewählt wird. Dadurch werden bewegte Bauteile vermieden, die Lösung wird jedoch nicht allen Anwendungsfällen gerecht. Insbesondere lässt sich damit nicht das Problem lösen, zeitweilig mehr Freiraum zwischen den feldbeeinflussenden elektrischen Komponenten der Übertragungsstrecke bereitzustellen.

Eine technische Aufgabe der vorliegenden Erfindung besteht somit darin, eine Vorrichtung zum drahtlosen Zuführen einer elektrischen Leistung und/oder elektrischen Signalen aus einem ersten Element zu einem zweiten Element zu schaffen. Weiters besteht eine technische Aufgabe der vorliegenden Erfindung darin, eine Vorrichtung zum drahtlosen Zuführen einer elektrischen Leistung aus einer gebäudeseitigen Versorgungseinrichtung zu einer sich in einem Türblatt befindlichen Verbrauchereinrichtung zu schaffen, wobei die Vorrichtung auch bei Schwankungen im Abstand zwischen Sender und Empfänger zuverlässig arbeiten soll. Eine weitere Aufgabe der besteht darin, Abweichungen im Abstand und der Position von Sender und Empfänger detektieren zu können.

Insbesondere soll durch die Vorrichtung sichergestellt werden, dass Sender und Empfänger stets durch einen möglichst geringen Abstand voneinander getrennt sind und eine vordefinierte Übertragungsposition einnehmen.

Diese technischen Aufgaben werden erfindungsgemäß dadurch gelöst, dass die erste elektrische Komponente bewegbar gehaltert ist und Betätigungsmittel zur relativen Bewegung der ersten elektrischen Komponente vorgesehen sind, wobei zumindest eine der elektrischen Komponenten in einem Einbaukasten drehbar gelagert ist, wobei zur Aufnahme der elektrischen Komponenten eine Wanne vorgesehen ist, und Betätigungsmittel zur Positionierung der Wanne im Einbaukasten vorgesehen sind. Dadurch wird erreicht, dass die erste elektrische Komponente derart ausgerichtet werden kann, dass der Abstand zum Übertragungsziel reduziert wird. Die relative Bewegung kann insbesondere als relativ in Bezug auf die mechanische Struktur, in der die elektrische Komponente bewegbar gehaltert ist, ausgeführt sein.

Die Betätigungsmittel können dazu eingerichtet sein, in Abhängigkeit von der Lage einer zweiten elektrischen Komponente in Bezug auf die mechanische Struktur durch eine Bewegung der ersten elektrischen Komponente die elektromagnetische Kopplung zwischen der ersten und der zweiten elektrischen Komponente zu verbessern. Dadurch kann sich die Vorrichtung an verschiedene Ausmaße des Luftspalts bzw. des Abstands zwischen Sender und Empfänger anpassen.

Die mechanische Struktur kann ein Teil eines veränderlichen mechanischen Zusammenhangs sein, an dem die zweite elektrische Komponente angeordnet ist. Dieser mechanische Zusammenhang kann in Form eines Türrahmens mit anhängenden Türblatt, eines Fensterrahmens mit anhängendem Fensterflügel, einer KFZ-Karosserie mit anhängender Schiebetür, Klapptür, Heckklappe oder Schiebedach, oder als lösbarer mechanischer Zusammenhang, insbesondere als in die Führungsschiene eines Haltesystems einschiebbarer Koffer ausgeführt sein.

Die erste elektrische Komponente kann im Gehäuse oder Verkleidungsteil drehbar, verschwenkbar, und/oder verschiebbar an einer Aufhängung, insbesondere einem Drehgelenk, einem Schwenkgelenk, einem Vier- oder Mehrgelenk gelagert sein. Die Betätigungsmittel können in Form von Elektromagneten, Permanentmagneten, Federn, Spangen oder dergleichen ausgeführt sein. Als Betätigungsmittel kann insbesondere zumindest eine Magnetscheibe und/oder zumindest eine Rückstellfeder vorgesehen sein.

Die Wirkkräfte der Betätigungsmittel können derart aufeinander abgestimmt sein, dass bei Annäherung der ersten elektrischen Komponenten an die zweite elektrische Komponente die Komponenten eine Übertragungsposition einnehmen, und bei Entfernung der ersten elektrischen Komponente von der zweiten elektrischen Komponente die Komponenten eine Ruheposition einnehmen.

Dabei kann insbesondere vorgesehen sein, dass die Betätigungsmittel derart ausgeführt sind, dass sie sich bei der ersten Annäherung vorerst abstoßen und die elektrischen Komponenten damit in einen eingeklappten Zustand versetzt werden. Damit wird beispielsweise bei der Verwendung in einer Tür oder einem Fenster verhindert, dass der Klappmechanismus beschädigt wird. Erst bei weiterer Annäherung bewirken die Betätigungsmittel ein Ausklappen der elektrischen Komponenten, um die elektromagnetische Kopplung zu maximieren und den Luftspalt zwischen den Komponenten auf ein Minimum zu beschränken. Diese Wirkung kann insbesondere bei der Verwendung von Magnetscheiben als Betätigungsmittel erreicht werden, wenn diese derart angeordnet werden, dass sie sich zunächst abstoßen, und erst bei fast exakter gegenseitiger Ausrichtung anziehen und somit bewirken, dass erst bei fast geschlossener Tür bzw. Fenster die elektrischen Komponenten ausklappen und eine Übertragungsposition einnehmen.

Die erste und/oder zweite elektrische Komponente kann zum Senden und/oder Empfangen von induktiven oder kapazitiven elektromagnetischen Signalen ausgeführt sein und insbesondere eine Spule oder eine Kondensatorplatte umfassen. Die erste und/oder die zweite elektrische Komponente kann insbesondere als Funkmodul ausgeführt sein. Die erste und/oder zweite elektrische Komponente kann eine elektronische Schaltung umfassen, die in ein Kunststoffmaterial, vorzugsweise einen Polymerwerkstoff, eingebettet und vorzugsweise vollkommen mit Kunststoff ummantelt ist. Die erste und/oder zweite elektrische Komponente kann keilförmig ausgeführt sein, um den Abstand beim Zusammenführen der Komponenten weiter zu reduzieren. Zumindest eine der elektrischen Komponenten kann in einem Einbaukasten beweglich, insbesondere drehbar oder verschiebbar gelagert sein. In der Praxis hat sich insbesondere gezeigt, dass Ausführungsformen mit um eine Achse verdrehbaren elektrischen Komponente besonders robust sind, da damit einem Verkanten der Komponente bzw. der beweglichen Teile, wie es bei lateral verschiebbaren Teilen aufgrund von Alterung oder Verschmutzung vorkommen kann, Vorschub geleistet wird.

Weiters können Betätigungsmittel zur Positionierung der Wanne im Einbaukasten vorgesehen sein. Die Wanne kann seitliche Drehlager zur Aufnahme eines, eine Rückstellfeder drehbar lagernden Achsstiftes aufweisen, wobei die Rückstellfeder als Schenkelfeder ausgeführt sein kann. Die Betätigungsmittel können erfindungsgemäß in Form von Elektro- oder Permanentmagneten, Federn, Spangen oder dergleichen ausgeführt sein, die im Einbaukasten, in der Wanne und/oder in der elektrischen Komponente angebracht sein.

Es kann erfindungsgemäß vorgesehen sein, dass als Betätigungsmittel eine oder mehrere Magnetscheiben vorgesehen sind. Weiters kann erfindungsgemäß als Betätigungsmittel eine oder mehrere Rückstellfedern vorgesehen sein. Die Wanne und/oder die elektrische Komponente kann über seitliche Ausnehmungen zum Einführen der erfindungsgemäßen Magnetscheiben verfügen. Durch geeignete Positionierung der Magnetscheiben kann gewährleistet werden, dass die elektrische Komponente automatisch eine genau definierte relative Position einnimmt.

Darüber hinaus kann erfindungsgemäß vorgesehen sein, dass die Wanne über seitliche Drehlager zur Aufnahme eines, die Rückstellfeder drehbar lagernden Achsstifts verfügen kann, wobei die Rückstellfeder insbesondere als Schenkelfeder ausgeführt sein kann, deren beide Schenkel einerseits an der Wanne und andererseits am Einbaukasten angreifen können.

Zumindest eine der elektrischen Komponenten kann zur Energieversorgung über seitliche Kontaktflächen verfügen, die über elektrisch leitfähige Achsstifte mit Schleifkontakten an der Rückseite des Einbaukastens verbunden sein können.

Dies ermöglicht eine einfache, robuste und platzsparende Möglichkeit, die elektrische Komponente mit elektrischer Energie zu versorgen, wobei die vorhandenen Betätigungsmittel als elektrische Leiter verwendet werden. Die Schleifkontakte können mit Lötanschlüssen für die Verbindung mit einer elektrischen Energiequelle ausgeführt sein.

Erfindungsgemäß können zur Kontrolle der Position der mechanischen Strukturen und/oder der elektrischen Komponenten Lagekontrollmittel vorgesehen sein. Die Lagekontrollmittel stellen sicher, dass die beiden elektrischen Komponenten korrekt zueinander ausgerichtet sind, und somit eine ausreichend gute elektromagnetische Kopplung erreicht wird.

Die Lagekontrollmittel können vorzugsweise in Form eines, an der ersten mechanischen Struktur angebrachten optischen Senders, insbesondere eines Infrarotsenders und eines, an der zweiten mechanischen Struktur angebrachten optischen Empfängers, insbesondere eines Infrarotempfängers ausgeführt sein. Sender und Empfänger können vorzugsweise so ausgerichtet sein, dass sie sich bei korrekter Ausrichtung der mechanischen Strukturen zueinander in Minimalabstand gegenüberstehen und somit das stärkste Signal liefern. Somit kann bei Verwendung in einem Fenster- oder Türsystem über die Lagekontrollmittel festgestellt werden, ob das Fenster oder die Tür geschlossen ist. Darüber hinaus können über die Infrarotverbindung zusätzliche Daten fälschungssicher und abhörsischer übertragen werden, z.B. Statusinformationen einer Alarmanlage.

Erfindungsgemäß kann weiters zur Positions- und Zustandskontrolle an der ersten mechanischen Struktur auch ein Funksender, insbesondere ein Bluetooth-Sender, und an der zweiten mechanischen Struktur ein Funkempfänger, insbesondere ein Bluetooth-Empfänger angebracht sein. Dadurch wird ermöglicht, dass der Zustand der ersten und zweiten mechanischen Struktur auch im voneinander getrennten (offenen) Zustand abgefragt werden kann.

Es kann vorteilhaft sein, wenn an der ersten mechanischen Struktur und/oder der zweiten mechanischen Struktur ein Energiepuffer, insbesondere ein elektrischer Energiespeicher wie eine Batterie oder ein Akku, zur Energieversorgung vorgesehen ist. Dies ermöglicht die autarke Abfrage der einzelnen elektronischen Komponenten. Vorzugsweise ist der Energiepuffer dann, wenn die elektrische Übertragung zwischen den elektrischen Komponenten hergestellt ist, mit diesen verbunden, sodass er elektrisch aufgeladen werden kann. Wenn die erste und zweite elektrische Komponente miteinander in Verbindung stehen, also bei einer Tür im geschlossenen Zustand, dann kann der Energiespeicher aufgeladen werden.

Dies ermöglicht beispielsweise auch, festzustellen, wie lange eine Tür bzw. ein Fenster als mechanische Struktur bereits offensteht bzw. nicht betätigt wurde. Gegebenenfalls kann über die Funkverbindung und den Energiepuffer ein Warnsignal abgegeben werden, auch wenn die elektrischen Komponenten nicht direkt miteinander in Verbindung stehen.

Erfindungsgemäß kann insbesondere vorgesehen sein, dass die erste mechanische Struktur ein Fensterflügel und die zweite mechanische Struktur ein Fensterrahmen ist, wobei die erste oder zweite elektrische Komponente am Äußeren oder im Inneren des Fensterflügels, insbesondere stirnseitig und im Scheibenzwischenraum eines Verbundfensterflügels angeordnet ist. Dies ermöglicht, einen Verbraucher im Scheibenzwischenraum anzuordnen, beispielsweise einen Elektromotor, ohne störende und die Isolationseigenschaften des Fensters verschlechternde Kabel oder Leitungen vorsehen zu müssen.

Für die korrekte Einnahme der optimalen Übertragungsposition der ersten bzw. zweiten elektrischen Komponente kann es insbesondere vorteilhaft sein, wenn die elektrischen Komponenten keilförmig ausgeführt sind, sodass beim Aufeinandertreffen der mechanischen Komponenten ein breites Ende der ersten elektrischen Komponente auf ein schmales Ende der zweiten elektrischen Komponente trifft, und sich die beiden Komponenten formschlüssig aneinander anschmiegen.

Weiters erstreckt sich die Erfindung auf eine Schließvorrichtung die zumindest eine erfindungsgemäße Vorrichtung umfasst. Die Schließvorrichtung kann Betätigungsmittel umfassen, die derart ausgeführt sind, dass die elektrischen Komponenten in einer Ausgangsstellung in ein Gehäuse eingeklappt sind, und bei Annäherung der elektrischen Komponenten diese durch die Betätigungsmittel ausklappen und sich zueinander ausrichten, wodurch eine Reduzierung des Abstands zwischen den elektrischen Komponenten gewährleistet ist. Diese Ausrichtung zueinander kann insbesondere als im wesentliche parallele Ausrichtung ausgeführt sein.

Weiters kann in einer erfindungsgemäßen Schließvorrichtung eine erste elektrische Komponente mit einer Versorgungseinrichtung verbindbar sein, und eine zweite elektrische Komponente mit einer Verbrauchereinrichtung verbindbar sein.

Über die beiden elektrischen Komponenten kann eine unidirektionale oder bidirektionale Datenübertragung erfolgen. Die drahtlose Übertragung erfolgt dabei über beabstandet zueinander angeordnete elektrische Komponenten.

Die kontaktlose Zuführung der elektrischen Leistung und/oder die bidirektionale Übertragung von Signalen erfolgt dabei vorzugsweise über eine induktive Kopplung.

Die erfindungsgemäße Schließvorrichtung kann induktiv gekoppelte Spuleneinheiten in den elektrischen Komponenten umfassen, welche neben der Übertragung von Energie auch die bidirektionale Übertragung von Steuersignalen ermöglicht.

Zusätzlich zu den oben erwähnten Vorteilen hat die erfindungsgemäße Vorrichtung den Vorteil, dass das unbefugte Auslesen der übertragenen Informationen oder die Manipulation dieser Informationen nicht oder nur erschwert möglich ist.

Aus diesem Grund bietet sich die erfindungsgemäße Vorrichtung insbesondere für sicherheitsrelevante Anwendungen an. Des weiteren ermöglicht die erfindungsgemäße Vorrichtung eine simple Integration in ein bestehendes Bussystem, wie es beispielsweise in Kraftfahrzeugen oder Gebäuden gebräuchlich ist.

Erfindungsgemäß können die zu übertragenden Datenblöcke auf das Frequenzmuster einer Spuleneinheit aufmoduliert werden und an eine primäre Spule weitergeleitet werden. Eine sekundäre Spule im Empfänger kann das Frequenzmuster aufnehmen, Energie für den Betrieb gewinnen und gleichzeitig die übertragenen Datenblöcke auswerten. Die Datenübertragung zurück kann durch Lastmodulation des Frequenzmusters auf der sekundären Seite erfolgen.

Durch die Verlegung der Steuerfunktion in den Bereich der Tür können Einsparungen von Kabelsträngen sowie eine Reduktion des Bustransfers (Auswertungen werden direkt an der Tür durchgeführt) erzielt werden. Aufgrund des intelligenten Systems wird zudem die Integration von zusätzlichen Sicherheitsfunktionen (Warnsignale, Überlastsicherung, etc.) ermöglicht.

Erfindungsgemäß kann weiters vorgesehen sein, dass die elektronischen Bauteile direkt in ein Kunststoffmaterial, vorzugsweise einen Polymerwerkstoff unter Verwendung der Kunststoffspritzgusstechnologie oder unter Verwendung der Formpresstechnik eingebettet ist.

Somit kann die elektronische Schaltung erfindungsgemäß vollkommen mit Kunststoff ummantelt sein. Das Übertragungssystem ist dann hermetisch dicht abgeschlossen und weitgehend gegenüber diversen Umwelteinflüssen unempfindlich. Somit ist ein Einsatz in korrosiver bzw. gefährlicher Umgebung ohne die bereits erwähnten Probleme möglich. Eine derartige Kapselung der elektronischen Bauteile führt auch zu einer erhöhten Manipulationssicherheit und erschwert das unbefugte Auslesen von Informationen.

Durch eine geeignete Positionierung und Abstimmung der Übertragungskomponenten können aufwendige Montageschritte wie das Einziehen des Kabelstrangs bzw. die Herstellung der Kontaktierung entfallen.

In Folge dessen können Zeiteinsparungen sowie eine Steigerung der Prozesssicherheit in der Fertigung erzielt werden. Erfindungsgemäß kann weiters vorgesehen sein, dass zur Kapselung der elektrischen Komponenten ein Ferritmaterial verwendet wird.

Um in geschlossenen Zustand ein geeignetes minimales Spaltmaß zwischen Sende- und Empfangsvorrichtung zu erreichen, können die besonderen Gegebenheiten im Gebäudebereich berücksichtigt werden. Bestehende Spaltmaße, die bei Temperaturänderung variieren und sich unterschiedlich auswirken können, können dadurch ausgeglichen werden.

Zur optimalen Gestaltung kann zur Positionierung der Kunststoffbauteile, in denen die Komponenten der Übertragungsvorrichtung integriert sind, insbesondere der Bereich um das Türschloss dienen, da hier die Spaltmaße der Tür im realen Einsatz am wenigsten variieren. Erfindungsgemäß kann vorgesehen sein, dass die elektrischen Komponenten und/oder die Wanne keilförmig ausgeführt sind, um im geschlossenen Zustand einen Formschluss zu erreichen.

Weitere erfindungsgemäße Merkmale sind aus der Beschreibung, den Zeichnungen und den Ansprüchen ersichtlich.

Die Erfindung wird nun anhand von Ausführungsbeispielen näher erläutert.
- Fig. 1: zeigt eine dreidimensionale schematische Ansicht eines ersten Ausführungsbeispiels der erfindungsgemäßen Übertragungsvorrichtung.
- Fig. 2: zeigt eine schematische Explosionsdarstellung des Ausführungsbeispiels einer erfindungsgemäßen Übertragungsvorrichtung aus Fig. 1.
- Fig. 3: zeigt eine schematische Explosionszeichnung eines zweiten erfindungsgemäßen Ausführungsbeispiels.
- Fig. 4: zeigt ein schematisches Ausführungsbeispiel einer erfindungsgemäßen Schließvorrichtung unter Verwendung von zwei erfindungsgemäßen Übertragungsvorrichtungen.
- Fig. 5a: und Fig. 5b zeigen schematische Querschnitte durch eine erfindungsgemäße Schließvorrichtung in einer Ruheposition (Fig. 5a) und einer Übertragungsposition (Fig. 5b).
- Fig. 6a - 6c: zeigen schematische Ansichten einer erfindungsgemäßen Schließvorrichtung bei Verwendung in einer Tür im geöffneten Zustand (Fig. 6b) und im geschlossenen Zustand (Fig. 6c).
- Fig. 7: zeigt ein schematisches Blockschaltbild einer erfindungsgemäßen Ausführungsform der Schließvorrichtung;
- Fig. 8: zeigt ein weiteres schematisches Blockschaltbild einer erfindungsgemäßen Ausführungsform der Schließvorrichtung;
- Fig. 9a - 9c: zeigen eine weitere erfindungsgemäße Ausführungsform der Übertragungsvorrichtung;
- Fig. 10: zeigt einen schematischen Querschnitt durch eine erfindungsgemäße Schließvorrichtung;
- Fig. 11: zeigt einen schematischen Querschnitt durch eine erfindungsgemäße Vorrichtung zur drahtlosen Übertragung elektrischer Leistung in den Scheibenzwischenraum eines Verbundfensters;
- Fig. 12: zeigt einen weiteren schematischen Querschnitt durch eine erfindungsgemäße Vorrichtung zur drahtlosen Übertragung elektrischer Leistung in den Scheibenzwischenraum eines Verbundfensters.

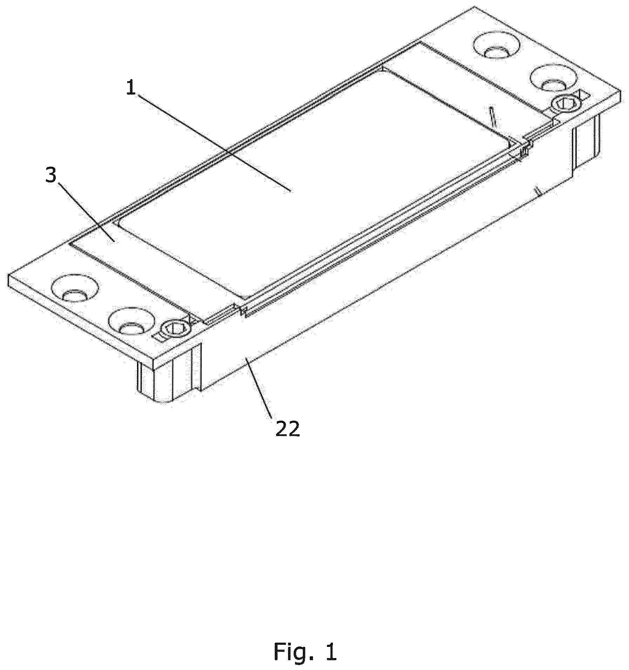

Fig. 1 zeigt eine schematische dreidimensionale Ansicht einer erfindungsgemäßen Ausführungsform der Übertragungsvorrichtung. In dieser Darstellung ist eine erste elektrische Komponente 1 sichtbar, welche in eine Wanne 3 eingesetzt ist. Die Wanne 3 ist wiederum in einem Einbaukasten 22 eingesetzt und in diesem beweglich gelagert.

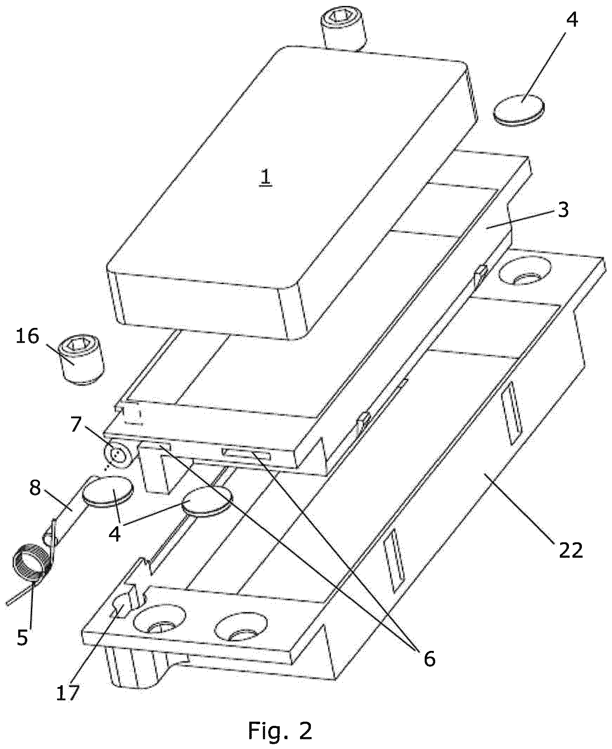

Fig. 2 zeigte eine Explosionsdarstellung dieses Ausführungsbeispiels. Die erste elektrische Komponente 1 ist in die Wanne 3 einsetzbar. Die Wanne 3 ist im Einbaukasten 22 beweglich gelagert. Zu diesem Zweck verfügt die Wanne 3 über seitliche Drehlager 7, in die Achsstifte 8 eingeführt sind. Weiters verfügt der Einbaukasten 22 über Ausnehmungen 17 zur Aufnahme der Achsstifte 8. Die Madenschrauben 16 dienen zur Fixierung der Achsstifte in diesen Ausnehmungen 17.

Zur Positionierung der Wanne 3 im Einbaukasten 22 sind Betätigungsmittel vorgesehen. Diese umfassen die Magnetscheiben 4 und die Rückstellfeder 5. Die Magnetscheiben 4 sind in Ausnehmungen 6 der Wanne 3 eingeführt. Die Rückstellfeder 5 ist an dem oben genannten Achsstift 8 angebracht und als Schenkelfeder ausgeführt, wobei deren beide Schenkel einerseits an der Wanne und andererseits am Einbaukasten 22 angreifen.

Durch diese Kombination zweier Betätigungsmittel wird erreicht, dass die Wanne mit eingesetztem Übertragungsmodul 1 in einer Ruheposition eingeklappt im Einbaukasten 22 verbleibt. Erst bei Annäherung an ein Übertragungsziel, welches Magneten aufweist oder magnetisierbar ist, wird durch magnetische Kräfte die Wanne 3 aus dem Einbaukasten 22 ausgeklappt und nimmt eine Übertragungsposition ein.

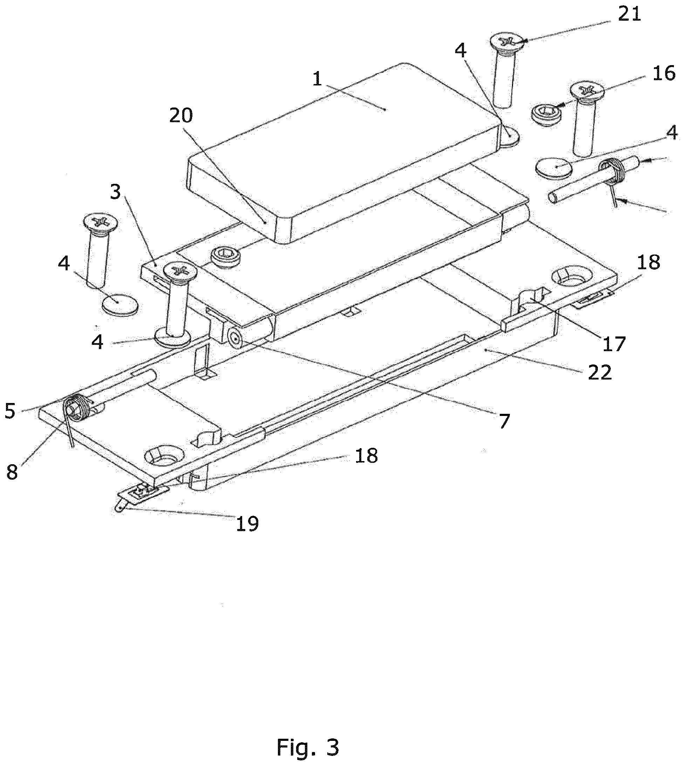

Fig. 3 zeigt eine weitere erfindungsgemäße Ausführungsform. Die erste elektrische Komponente 1 ist in die Wanne 3 einsetzbar. Die Wanne 3 ist im Einbaukasten 22 beweglich gelagert. Zu diesem Zweck verfügt die Wanne 3 über seitliche Drehlager 7, in die Achsstifte 8 eingeführt sind. Weiters verfügt der Einbaukasten 22 über Ausnehmungen 17 zur Aufnahme der Achsstifte 8. Die Madenschrauben 16 dienen zur Fixierung der Achsstifte in diesen Ausnehmungen 17. Zur Positionierung der Wanne 3 im Einbaukasten 22 sind Betätigungsmittel vorgesehen.

Diese umfassen die Magnetscheiben 4 und die Rückstellfeder 5. Die Magnetscheiben 4 sind in Ausnehmungen 6 der Wanne 3 eingeführt. Die Rückstellfeder 5 ist an dem oben genannten Achsstift 8 angebracht und als Schenkelfeder ausgeführt.

Zur Energieversorgung ersten elektrischen Komponente 1 sind elektrische Schleifkontakte 18 an der Unterseite des Einbaukastens 22 vorgesehen, die mit Lötanschlüssen 19 versehen sind. Im Betrieb kontaktiert der, elektrisch leitfähig ausgeführte, Achsstift 8 den Schleifkontakt 18. Der Achsstift 8 ist derart ausgeführt, dass er an seinem in das Drehlager 7 eingeführten Ende eine Kontaktfläche 20 der ersten elektrischen Komponente 1 berührt. Somit wird eine elektrische Kontaktierung der ersten elektrischen Komponente 1 durch die Schleifkontakte 18 ermöglicht.

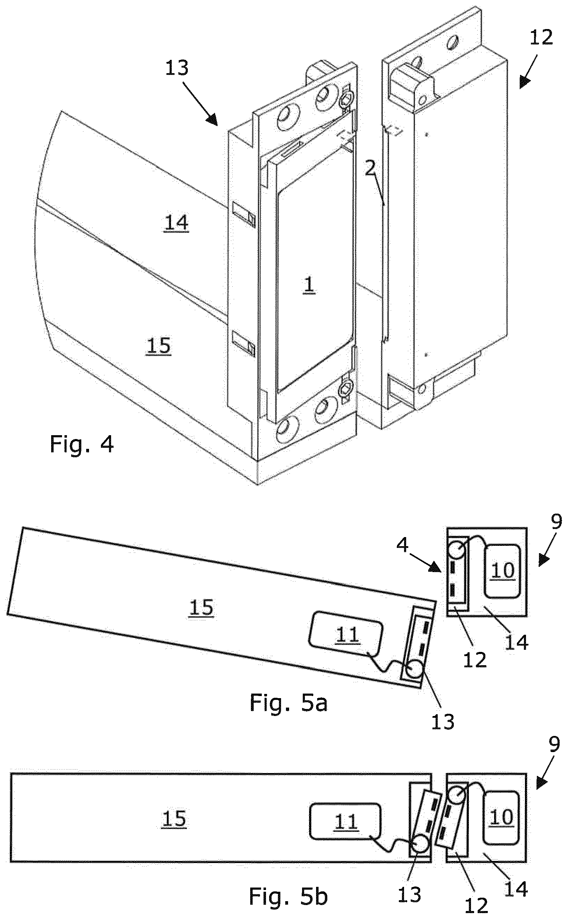

Fig. 4 zeigt einen Türstock 14 und ein Türblatt 15, wobei beide Objekte über erfindungsgemäße Übertragungsvorrichtungen mit elektrischen Komponenten verfügen. Bei Annäherung der ersten elektrischen Komponente 1 an die zweite elektrische Komponente 2 entsteht zwischen den Magnetscheiben dieser Übertragungsvorrichtungen eine Kraft, wobei beide elektrischen Komponenten aus ihrer Ruheposition in Übertragungsposition bewegt werden. Dies ist in Aufsicht schematisch in Fig. 5a und Fig. 5b gezeigt.

Fig. 5a zeigt die Ruheposition, in einem Zustand in den die Kraft der Rückstellfeder 5 die Kraft der Magnetscheiben 4 übersteigt. Fig. 5b zeigt hingegen die Übertragungsposition, wenn die Kraft der Magnetscheiben 4 die Kraft der Rückstellfedern 5 übersteigt. Weiters sind in Fig. 5a und Fig. 5b die Versorgungseinrichtung 10 und die Verbrauchereinrichtung 11 gezeigt. Das Übertragungsziel 9 kann, je nach Richtung der Übertragung entweder die erste Übertragungsvorrichtung 12 oder die zweite Übertragungsvorrichtung 13 sein. Die Übertragungsposition wird erst im komplett geschlossenen Zustand der Tür erreicht, denn erst in diesem Zustand bewirken die sich ansonsten abstoßenden Magnetscheiben 4, dass die Kraft der Rückstellfedern 5 überwunden wird und die Wannen 3 mit den elektrischen Komponenten 1, 2 aus den Einbaukästen 2 ausklappen.

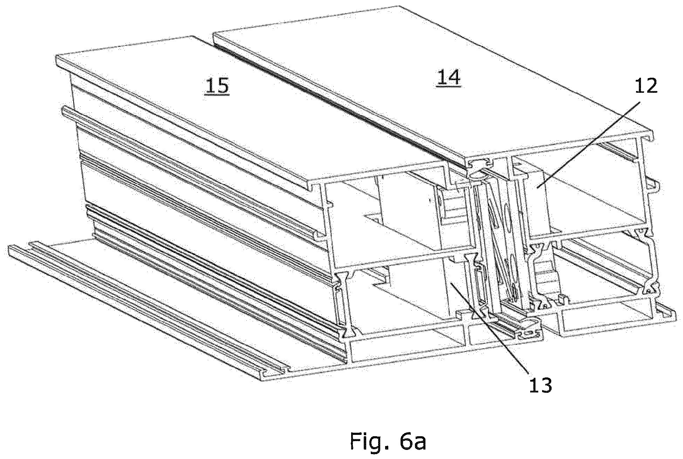

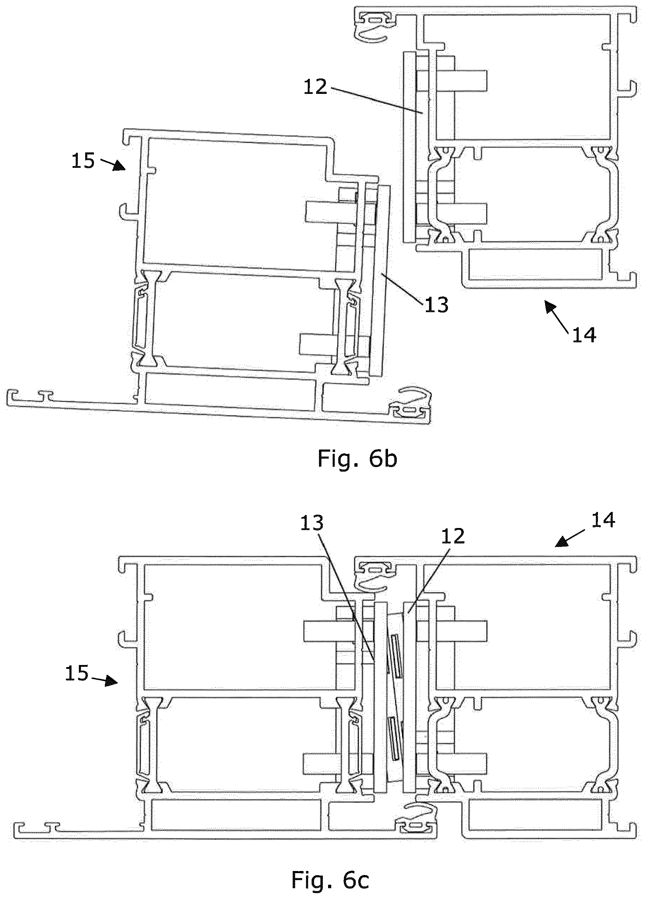

Fig. 6a zeigt ein weiteres Ausführungsbeispiel der erfindungsgemäßen Kopplungsvorrichtung aus der Praxis. In diesem Ausführungsbeispiel sind die erste Übertragungsvorrichtung 12 und die zweite Übertragungsvorrichtung 13 jeweils in einem Türstock 14 bzw. Türblatt 15 integriert, vorzugsweise durch Schrauben oder andere Befestigungsmittel an diesen befestigt, und umfassen elektrische Komponenten 1, 2. Fig. 6b zeigt einen Querschnitt dieser Ausführungsform in der Ruheposition, wenn die Tür geöffnet ist. Die beiden Wannen der Übertragungsvorrichtungen 12, 13 sind aufgrund der Kraft der Rückhaltefedern eingeklappt. Fig. 6c zeigt einen Querschnitt dieser Ausführungsform in Übertragungsposition, wenn die Tür geschlossen ist. Die beiden Wannen der Übertragungsvorrichtungen 12 und 13 sind ausgeklappt und parallel zueinander ausgerichtet. Der Luftspalt zwischen den beiden Übertragungsvorrichtungen wird, auch bei Toleranzen im Abstand zwischen Türstock 14 und Türblatt 15, minimiert.

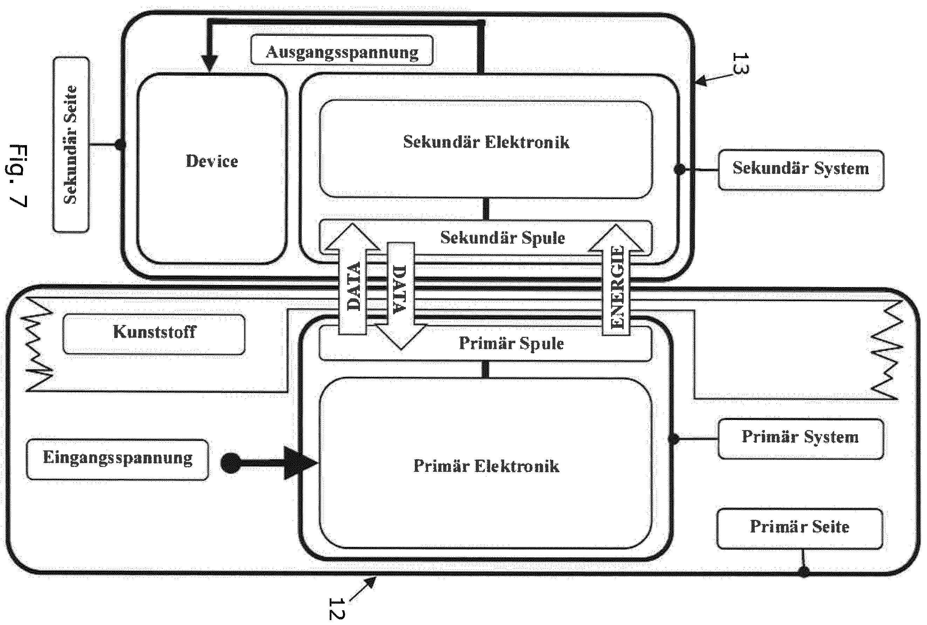

Fig. 7 zeigt ein Blockschaltbild der elektronischen Schaltung in der ersten elektrischen Komponente 1. Auf einer Primärseite ist eine primäre Elektronik mit einer primäre Spule verbunden. Die primäre Elektronik ist mit einer Eingangsspannung gespeist. Die zu übertragenden Daten werden von der primären Elektronik an die primäre Spule weitergegeben, und die primäre Spule moduliert die Daten auf ein niederfrequentes Signal auf. Dieses wird an die sekundäre Spule übergeben, welche aus dem übertragenen Daten Energie gewinnt und diese an die sekundäre Elektronik weitergibt. Weiters können auf der sekundären Seite die übertragenen Daten ausgewertet werden, und es können Daten an die primäre Seite zurückgegeben werden.

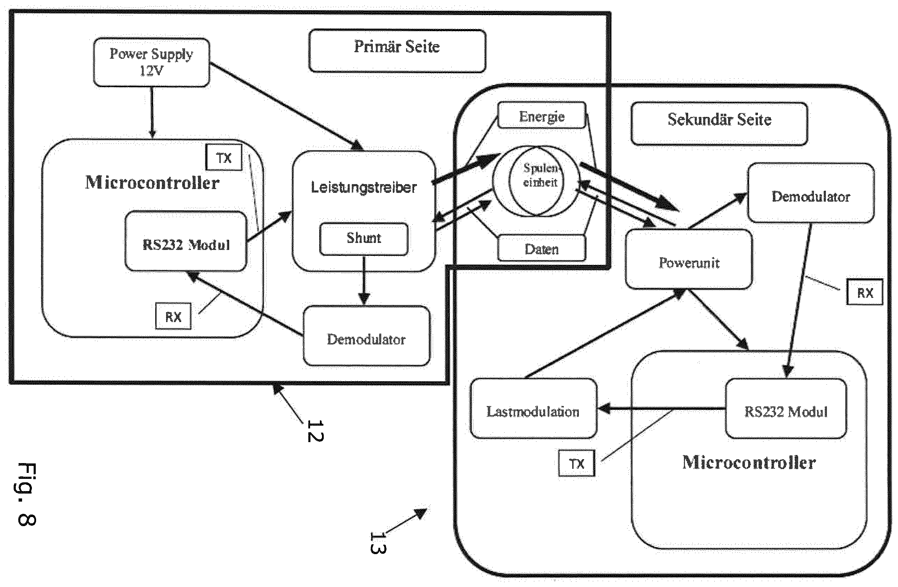

Fig. 8 zeigt ein weiteres Blockschaltbild der Elektronik einer ersten Übertragungsvorrichtung 12 und einer zweiten Übertragungsvorrichtung 13, welche über die gekoppelten elektrischen Komponenten miteinander kommunizieren. Die erste Übertragungsvorrichtung verfügt über eine Energieversorgung, während die zweite Übertragungsvorrichtung 13 durch die übertragene Leistung gespeist wird.

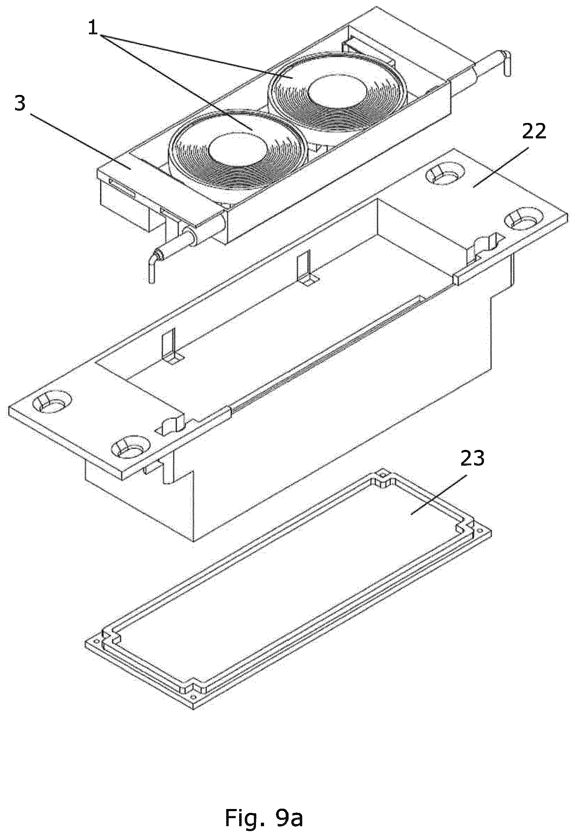

Fig. 9a zeigt eine schematische Ansicht einer weiteren erfindungsgemäßen Ausführungsform der Übertragungsvorrichtung. Eine mehrteilige erste elektrische Komponente 1 ist in eine Wanne 3 eingesetzt und die Wanne 3 ist in einem Einbaukasten 22 beweglich gelagert. Die elektrische Komponente 1 ist in Form zweier Spulen realisiert. Der Einbaukasten 22 ist mit einer unteren Abdeckung 23 versehen.

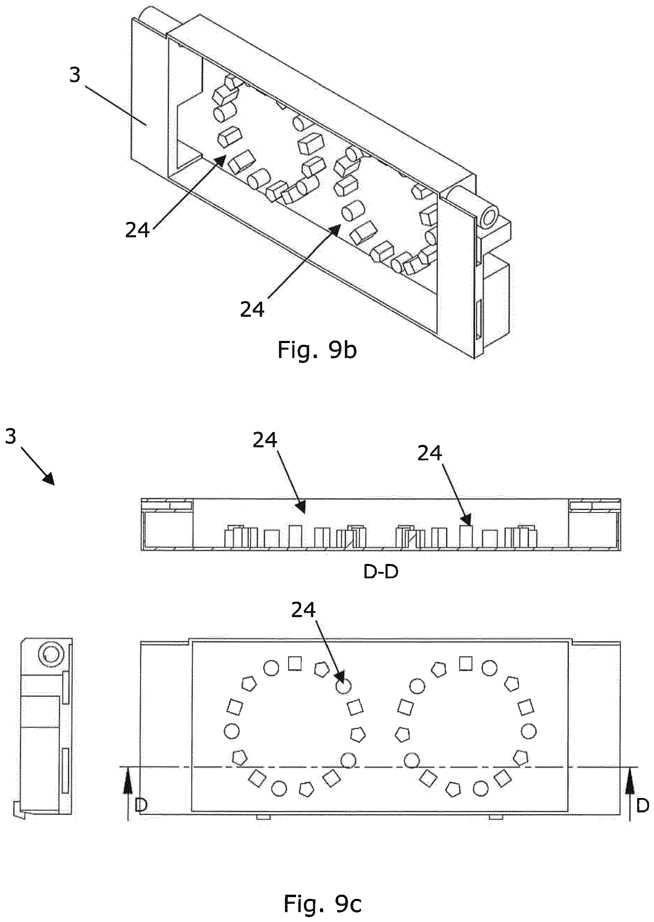

Fig. 9b zeigt eine dreidimensionale Darstellung der Wanne 3 des Ausführungsbeispiels aus Fig. 9a. Zur Halterung der Spulen sind im Inneren der Wanne 3 kreisförmig angeordnete Abstandhalter 24 in Form von Stiften bzw. Erhebungen angeordnet. Die elektrischen Komponenten 1 werden beim Zusammenbau auf die Abstandhalter gelegt und in Polyurethanharz oder ein anderes Füllmaterial eingegossen.

Fig. 9c zeigt die Wanne 3 in Aufriss und Seitenriss sowie als Schnittdarstellung entlang der Linie D-D. Die Abstandhalter 24 dienen als Klebehilfen und weisen unterschiedlichen Querschnitt auf (rechteckig, kreisförmig bzw. fünfeckig), wobei Abstandshalter mit unterschiedlichem Querschnitt jeweils unterschiedlich lang sind.

Beim Zusammenbau kann durch Herausbrechen bestimmter Abstandhalter 24 die gewünschte Position der elektrischen Komponenten 1 gewählt und auf mögliche Abweichungen in der Dicke der elektrischen Komponenten 1 reagiert werden.

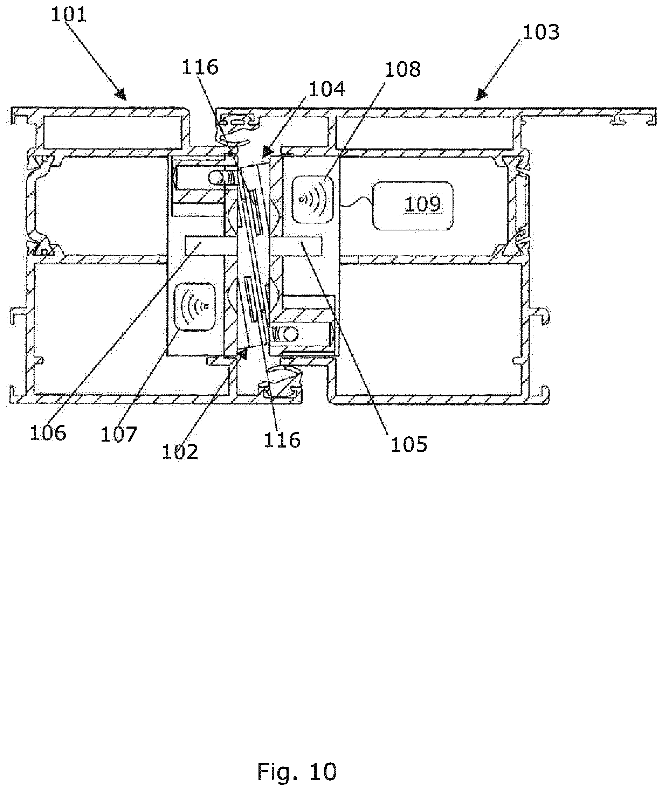

Fig. 10 zeigt einen schematischen Querschnitt durch eine erfindungsgemäße Schließvorrichtung mit einer ersten mechanischen Struktur 101 und einer zweiten mechanischen Struktur 103. In der ersten mechanischen Struktur 101 ist eine erste elektrische Komponente 102 beweglich angeordnet, und in der zweiten mechanischen Struktur ist eine zweite elektrische Komponente 104 beweglich angeordnet. Die beiden elektrischen Komponenten 102, 104 weisen Spulen zum Senden bzw. Empfangen von elektrischer Energie auf. Zur korrekten Ausrichtung verfügen die elektrischen Komponenten über Betätigungsmittel in Form von Magnetscheiben 116. Wenn sich die beiden elektrischen Komponenten gegenseitig annähern, stellen sie ihre Position aufgrund der magnetischen Kraft der Magnetscheiben 116 so ein, dass sich eine optimale Übertragungsposition ergibt.

Zur Kontrolle der optimalen Übertragungsposition ist in der ersten mechanischen Struktur ein Infrarotempfänger 105, und in der zweiten mechanischen Struktur ein Infrarotsender 106 vorgesehen. Bei korrekter Stellung der ersten mechanischen Struktur in Bezug auf die zweite mechanische Struktur wird vom Infrarotempfänger das stärkste Signal empfangen und es kann somit die optimale Übertragungsposition detektiert werden. Weiters befindet sich in der ersten mechanischen Struktur ein Bluetooth-Sender 107 und in der zweiten mechanischen Struktur ein Bluetooth-Empfänger 108. Zur Versorgung zumindest eines dieser Funkmodule kann ein elektrischer Energiespeicher 109 vorgesehen sein. Dadurch wird erreicht, dass sowohl die erste mechanische Struktur, als auch die zweite mechanische Struktur über Funk erreichbar sind, und der jeweilige Zustand (offen/geschlossen) abgefragt werden kann.

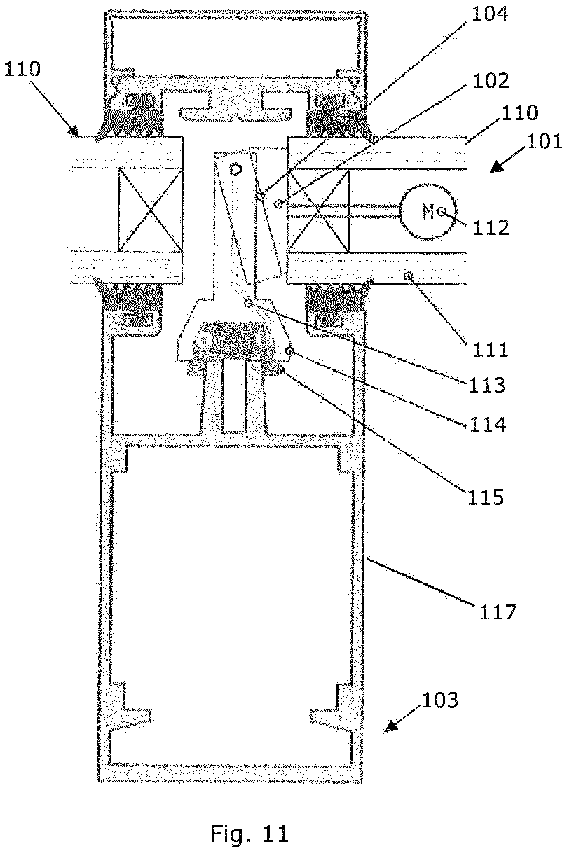

Fig. 11 zeigt ein weiteres Ausführungsbeispiel einer erfindungsgemäßen Übertragungsvorrichtung. An einer ersten mechanischen Struktur 101 in Form eines Verbundfensters 110 ist eine erste elektrische Komponente 102 angebracht. An einer zweiten mechanischen Struktur 103 in Form eines Fensterstocks ist eine zweite elektrische Komponente 104 angebracht. Das Verbundfenster 110 verfügt über zwei Glasscheiben 111, wobei der Scheibenzwischenraum aus Gründen der besseren Wärmeisolation mit Edelgas gefüllt ist und an seinen Stirnseiten abgedichtet ist.

Im Scheibenzwischenraum an der Stirnseite des Verbundfensters 110 befindet sich ein Elektromotor 112, der zur Ansteuerung eines Verbrauchers, beispielsweise einer Jalousie dient. Ebenfalls an den Stirnseiten befindet sich die erste elektrische Komponente 102, die im vorliegenden Ausführungsbeispiel nicht beweglich ausgeführt ist. Korrespondierend zu dieser ist die zweite elektrische Komponente 104 beweglich ausgeführt und passt sich der Lage der ersten elektrischen Komponente 102 an. Die zweite elektrische Komponente 104 nimmt einen Stromabnehmer 113 auf und ist an einem Spulenhalter 114 angebracht, der über ein Kunststoffprofil 115 an einem Fensterrahmen 117 montiert ist.

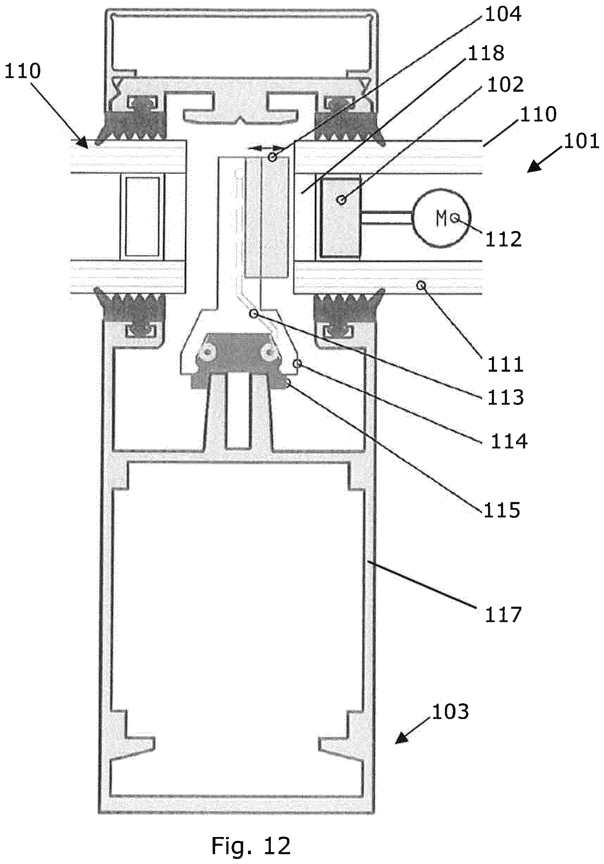

Fig. 12 zeigt eine weitere vorteilhafte Ausführungsform. In dieser gegenüber der Vorrichtung aus Fig. 11 verbesserten Ausführungsform ist die erste elektrische Komponente 102 im Scheibenzwischenraum des Verbundfensters 110 angebracht. Die erste elektrische Komponente 102 ist starr montiert, während die zweite elektrische Komponente 104 beweglich ausgeführt ist, um eine möglichst gute elektromagnetische Kopplung mit der ersten elektrischen Komponente zu gewährleisten. Zur Betätigung der elektrischen Komponenten sind Magnete oder andere fernwirksame Betätigungsmittel vorgesehen, die stark genug sind, um durch die Dicke der Isolationsschicht 118 wirksam zu sein. Dies hat den Vorteil dass die Zuleitungen zum elektrischen Verbraucher nicht durch die Isolationsschicht geführt werden muss.

Die vorliegende Erfindung beschränkt sich nicht auf die Verwendung erfindungsgemäßer Übertragungsvorrichtungen in Türen oder Fenstern von Gebäuden oder Fahrzeugen. Es sind erfindungsgemäß sämtliche Anwendungen erfindungsgemäßer Übertragungs- oder Kopplungsvorrichtungen durch diese Erfindung umfasst. Dies kann jede Form der kontaktlose Energieübertragung oder kontaktlosen Sensorik umfassen, bei der es darauf ankommt, ein variables Spaltmaß möglichst sicher und robust zu überbrücken und sicherzustellen, dass Sender und Empfänger durch einen möglichst geringen Abstand voneinander getrennt sind.

### Bezugszeichenliste

- 1: Elektrische Komponente
- 2: Elektrische Komponente
- 3: Wanne
- 4: Magnetscheibe
- 5: Rückstellfeder
- 6: Ausnehmung
- 7: Drehlager
- 8: Achsstift
- 9: Übertragungsziel
- 10: Versorgungseinrichtung
- 11: Verbrauchereinrichtung
- 12: Erste Übertragungsvorrichtung
- 13: Zweite Übertragungsvorrichtung
- 14: Türstock
- 15: Türblatt
- 16: Madenschraube
- 17: Ausnehmung
- 18: Schleifkontakt
- 19: Lötanschluss
- 20: Kontaktfläche
- 21: Befestigungsschraube
- 22: Einbaukasten
- 23: Abdeckung
- 24: Abstandhalter
- 101: Erste mechanische Struktur
- 102: Erste elektrische Komponente
- 103: Zweite mechanische Struktur
- 104: Zweite elektrische Komponente
- 105: Infrarotsender
- 106: Infrarotempfänger
- 107: Bluetooth-Sender
- 108: Bluetooth-Empfänger
- 109: Elektrischer Energiespeicher
- 110: Verbundfenster
- 111: Glasscheibe
- 112: Elektromotor
- 113: Stromabnehmer
- 114: Spulenhalter
- 115: Kunststoffprofil
- 116: Magnetscheibe
- 117: Fensterrahmen
- 118: Isolationsschicht

## Patentansprüche

1. Vorrichtung zur drahtlosen Übertragung von elektrischer Leistung und elektrischen Signalen, umfassend eine an einer mechanischen Struktur, insbesondere in einem Gehäuse oder einem Verkleidungsteil angebrachte erste elektrische Komponente (1, 102), wobei die erste elektrische Komponente bewegbar gehaltert ist und Betätigungsmittel zur relativen Bewegung der ersten elektrischen Komponente vorgesehen sind, wobei die Betätigungsmittel dazu eingerichtet sind, in Abhängigkeit von der Lage einer zweiten elektrischen Komponente (2, 104) in Bezug auf die mechanische Struktur durch eine Bewegung der ersten elektrischen Komponente (1, 102) die elektromagnetische Kopplung zwischen der ersten und der zweiten elektrischen Komponente zu verbessern, **dadurch gekennzeichnet, dass** zumindest eine der elektrischen Komponenten (1,102, 2, 104) in einem Einbaukasten (22) drehbar gelagert ist, wobei zur Aufnahme der elektrischen Komponenten (1, 102, 2, 104) eine im Einbaukasten (22) drehbar gelagerte Wanne (3) vorgesehen ist, und Betätigungsmittel zur Positionierung der Wanne (3) im Einbaukasten (22) vorgesehen sind.

2. Vorrichtung nach Anspruch 1, **dadurch gekennzeichnet, dass** die mechanische Struktur ein Teil eines veränderlichen mechanischen Zusammenhangs ist, an dem die zweite elektrische Komponente angeordnet ist, wobei der mechanische Zusammenhang beispielsweise in Form eines Türrahmens mit anhängenden Türblatt, eines Fensterrahmens mit anhängendem Fensterflügel, einer KFZ-Karosserie mit anhängender Schiebetür, Klapptür, Heckklappe oder Schiebedach, oder als lösbarer mechanischer Zusammenhang, insbesondere als in die Führungsschiene eines Haltesystems einschiebbarer Koffer ausgeführt ist.

3. Vorrichtung nach Anspruch 2, **dadurch gekennzeichnet, dass** die mechanische Struktur ein Fensterflügel oder ein Fensterrahmen ist, wobei die erste oder zweite elektrische Komponente am Äußeren oder im Inneren des Fensterflügels, insbesondere stirnseitig und im Scheibenzwischenraum eines Verbundfensterflügels (110) angeordnet ist.

4. Vorrichtung nach Anspruch 3, **dadurch gekennzeichnet, dass** die erste elektrische Komponente (1, 102) im Gehäuse oder Verkleidungsteil drehbar, verschwenkbar, und/oder verschiebbar an einer Aufhängung, insbesondere einem Drehgelenk, einem Schwenkgelenk, einem Vier- oder Mehrgelenk gelagert ist.

5. Vorrichtung nach einem der vorhergehenden Ansprüche, **dadurch gekennzeichnet, dass** die Betätigungsmittel in Form von Elektromagneten, Permanentmagneten, insbesondere Magnetscheiben (4), Federn, insbesondere Rückstellfedern (5), Spangen oder dergleichen ausgeführt sind.

6. Vorrichtung nach einem der vorhergehenden Ansprüche, **dadurch gekennzeichnet, dass** die Wirkkräfte der Betätigungsmittel derart aufeinander abgestimmt sind, dass bei Annäherung der ersten elektrischen Komponente (1, 102) an die zweite elektrische Komponente (2, 104) die Komponenten eine Übertragungsposition einnehmen, und bei Entfernung der ersten elektrischen Komponente von der zweiten elektrischen Komponente die Komponenten eine Ruheposition einnehmen.

7. Vorrichtung nach einem der vorhergehenden Ansprüche, **dadurch gekennzeichnet, dass**. die erste elektrische Komponente (1, 102) und/oder die zweite elektrische Komponente (2, 104) zum Senden und/oder Empfangen von induktiven oder kapazitiven elektromagnetischen Signalen ausgeführt ist, wobei die erste elektrische Komponente und/oder die zweite elektrische Komponente vorzugsweise eine Spule oder eine Kondensatorplatte umfasst

8. Vorrichtung nach einem der vorhergehenden Ansprüche , **dadurch gekennzeichnet, dass** die erste elektrische Komponente (1, 102) und/oder die zweite elektrische Komponente (2, 104) eine elektronische Schaltung umfasst, die in ein Kunststoffmaterial, vorzugsweise einen Polymerwerkstoff, eingebettet und vorzugsweise vollkommen mit Kunststoff ummantelt ist.

9. Vorrichtung nach einem der vorhergehenden Ansprüche , **dadurch gekennzeichnet**, dassdie elektrischen Komponenten (1, 102, 2, 104) keilförmig ausgeführt sind.

10. Vorrichtung nach einem der vorhergehenden Ansprüche, **dadurch gekennzeichnet, dass** die Wanne (4) seitliche Drehlager (7) zur Aufnahme eines, eine Rückstellfeder (5) drehbar lagernden, elektrisch leitfähigen Achsstiftes (8) aufweist, wobei die Rückstellfeder (5) als Schenkelfeder ausgeführt ist, wobei zumindest eine der elektrischen Komponenten (1, 102, 2, 104) zur Energieversorgung über seitliche Kontaktflächen verfügt, die über den Achsstift (8) mit Schleifkontakten (18) an der Rückseite des Einbaukastens (22) verbunden sind.

11. Vorrichtung nach einem der vorhergehenden Ansprüche, **dadurch gekennzeichnet, dass** zur Kontrolle der Position der ersten elektrischen Komponente relativ zur zweiten elektrischen Komponente an den elektrischen Komponenten und/oder den mechanischen Strukturen Lagekontrollmittel vorgesehen sind, die vorzugsweise in Form eines optischen Senders, insbesondere Infrarotsenders (105) und eines optischen Empfängers, insbesondere Infrarotempfängers (106) ausgeführt sind.

12. Vorrichtung nach einem der vorhergehenden Ansprüche, **dadurch gekennzeichnet, dass** zur Positions- und Zustandskontrolle an den mechanischen Strukturen und/oder den elektrischen Komponenten ein Funksender, insbesondere ein Bluetooth-Sender (107), und ein Funkempfänger, insbesondere ein Bluetooth-Empfänger (108) vorgesehen ist.

13. Vorrichtung nach einem der vorhergehenden Ansprüche, **dadurch gekennzeichnet, dass** an den mechanischen Strukturen und/oder den elektrischen Komponenten ein Energiepuffer, insbesondere ein elektrischer Energiespeicher (9), zur Energieversorgung vorgesehen ist.

14. Elektrische Schließvorrichtung, **dadurch gekennzeichnet, dass** die Schließvorrichtung zumindest eine Vorrichtung nach einem der vorhergehenden Ansprüche umfasst.

15. Elektrische Schließvorrichtung nach Anspruch 14, **dadurch gekennzeichnet, dass** Betätigungsmittel vorgesehen sind, die derart ausgeführt sind, dass die elektrischen Komponenten in einer Ausgangsstellung in ein Gehäuse eingeklappt sind, und bei Annäherung der elektrischen Komponenten diese durch die Betätigungsmittel ausklappen und sich zueinander ausrichten, wodurch eine Reduzierung des Abstands zwischen den elektrischen Komponenten gewährleistet ist, und wobei vorzugsweise eine erste elektrische Komponente mit einer Versorgungseinrichtung (10) verbindbar ist, und eine zweite elektrische Komponente mit einer Verbrauchereinrichtung (11) verbindbar ist.

## Claims

1. Device for the wireless transmission of electrical power and electrical signals, comprising a mechanical structure, in particular a first electrical component (1, 102) applied in a housing or a cladding element, wherein the first electrical component is movably held and operating means for relatively moving the first electrical component are provided, wherein as a function of the position of a second electrical component (2, 104) in relation to the mechanical structure, the operating means are configured to improve, through moving the first electrical component (1, 102), the electromagnetic coupling between the first and the second electrical component, **characterised in that** at least one of the electric components (1, 102, 2, 104)is borne in a rotatable fashion in a mounting box (22) wherein to accommodate the electrical components (1, 102, 2, 104) a rotabably borne trough (3) is provided in the mounting box (22) and operating means for positioning the trough in the mounting box (22) are provided.

2. Device according to claim 1 **characterised in that** the mechanical structure is part of a changeable mechanical combination, on which the second component is arranged, wherein the mechanical combination is in the form, for example, of a door frame with an attached door leaf, a window frame with an attached window casement, a motor vehicle body with an attached sliding door, hinged door , tailgate or sliding roof, or as a detachable mechanical combination, in particular a case that can be inserted into the guide rail of a holding system.

3. Device according to claim 2 **characterised in that** the mechanical structure is a window casement or a window frame, wherein the first or second electrical component is arranged on the outside or inside of the window casement, in particular on the front and in the space between the panes in a composite window casement (110) .

4. Device according to claim 3 **characterised in that** the first electrical component (1, 102) is borne the housing or cladding element in a rotatable, pivotal and/or displaceable manner on a suspension, in particular a rotary joint, a swivel joint, a quadruple or multiple joint.

5. Device according to any one of the preceding claims **characterised in that** the operating means are in the form of electromagnets, permanent magnets, in particular magnetic discs (4), springs, in particular return springs (5), clasps or suchlike.

6. Device according to any one of the preceding claims **characterised in that** the effective forces of the operating means are coordinated with each other in such a way that when the first electrical component (1, 102) approaches the second electrical component (2, 104) the components assume a transmission position, and when the first component is moved away from the second component the components assume a rest position.

7. Device according to any one of the preceding claims **characterised in that** the first electrical component (1, 102) and/or the second electrical component (2, 104) is/are configured to send and/or receive inductive or capacitive electromagnetic signals, wherein the first electrical component and/or the second electrical component preferably comprise(s) a coil or a capacitor plate.

8. Device according to any one of the preceding claims **characterised in that** the first electrical component (1, 102) and/or the second electrical component (2, 104) comprise(s) an electronic circuit which is embedded in a plastic material, preferably a polymer material and is preferably completely encapsulated in plastic.

9. Device according to any one of the preceding claims **characterised in that** the electronic components (1, 102, 2, 104) are wedge-shaped.

10. Device according to any one of the preceding claims **characterised in that** the trough (3) has lateral rotary bearings (7) for accommodating an electrically conductive axial pin (8) which rotationally bears a return spring (5), wherein the return spring (5) is configured as a leg spring, wherein at least one of the electrical components (1, 102, 2, 104) comprises lateral contact surfaces for the energy supply which are connected via the axial pin (8) to sliding contacts (18) on the rear of the mounting box (22).

11. Device according to any one of the preceding claims **characterised in that** to check the position of the first electrical component relative to the second electrical component, position monitoring means are provided on the electrical components and/or the mechanical structures, which are preferably in the form of an optical transmitter, more particular an infrared transmitter (105) and an optical receiver, more particularly an infrared receiver (106).

12. Device according to any one of the preceding claims **characterised in that** for position and status monitoring a radio transmitter, more particularly a Bluetooth transmitter (107), and a radio receiver, more particularly a Bluetooth receiver (108) are provided on the mechanical structures and/or the electrical components.

13. Device according to any one of the preceding claims **characterised in that** on the mechanical structure and/or the electrical components an energy buffer, more particularly an electrical energy store (9), is provided for energy supply.

14. Electrical closing device **characterised in that** the closing device comprises at least one device according to any one of the preceding claims.

15. Electrical closing device according to claim 14 **characterised in that** operating means are provided which are designed in such a way that in an initial position the electrical components are folded into a housing and when the electrical components approach each other these fold out through the operating means and align themselves toward each other, as a result of which the distance between the electrical components is reduced, and wherein preferably a first electrical component can be connected to a supply device (10) and a second electrical component can be connected to a consumer device (11).

## Revendications

1. Dispositif, destiné à la transmission sans fil d'une puissance électrique et de signaux électriques, comprenant un premier composant électrique (1, 102) monté sur une structure mécanique, notamment dans un boîtier ou dans un élément d'habillage, le premier composant électrique étant maintenu de manière mobile et des moyens de manoeuvre étant prévus pour le déplacement relatif du premier composant électrique, les moyens de manoeuvre étant agencés pour, en fonction de la position d'un deuxième composant électrique (2, 104) améliorer, par rapport à la structure mécanique, par un déplacement du premier composant électrique (1, 102) l'accouplement électromagnétique entre le premier et le deuxième composants électriques, **caractérisé en ce qu'**au moins l'un des composants électriques (1,102, 2, 104) est logé de manière rotative dans un caisson encastrable (22), une cuve (3) logée en rotation dans le caisson encastrable (22) étant prévue pour recevoir les composants électriques (1, 102, 2, 104), et des moyens de manoeuvre étant prévus pour le positionnement de la cuve (3) dans le caisson encastrable (22).

2. Dispositif selon la revendication 1, **caractérisé en ce que** la structure mécanique est une partie d'un complexe mécanique variable, sur lequel est placé le deuxième composant électrique, le complexe mécanique étant réalisé par exemple sous la forme d'un encadrement de porte avec battant de porte accroché, d'un encadrement de fenêtre avec battant de fenêtre accroché, d'une carrosserie de véhicule automobile avec porte coulissante accrochée, d'une porte battante, d'un hayon arrière ou d'un toit coulissant, ou sous la forme d'un complexe mécanique amovible, notamment de coffres insérables dans les coulisses d'un système de maintien.

3. Dispositif selon la revendication 2, **caractérisé en ce que** la structure mécanique est un battant de fenêtre ou un encadrement de fenêtre, le premier ou le deuxième composant électrique étant placé sur l'extérieur ou à l'intérieur du battant de fenêtre, notamment sur la face frontale et dans l'espace intermédiaire entre les vitres d'un battant de fenêtre à double vitrage (110).

4. Dispositif selon la revendication 3, **caractérisé en ce que** le premier composant électrique (1, 102) est logé dans le boîtier ou dans l'élément d'habillage de manière rotative, pivotante et/ou déplaçable sur une suspension, notamment une articulation rotative, une articulation pivotante, une articulation à quatre points ou une articulation multiple.

5. Dispositif selon l'une quelconque des revendications précédentes, **caractérisé en ce que** les moyens de manoeuvre sont réalisés sous la forme d'électroaimants, d'aimants permanents, notamment de disques magnétiques (4), de ressorts, notamment de ressorts de rappel (5), de fibules ou similaires.

6. Dispositif selon l'une quelconque des revendications précédentes, **caractérisé en ce que** les forces d'action des moyens de manoeuvre sont synchronisées les unes sur les autres de telle sorte que lorsque le premier composant électrique (1, 102) se rapproche du deuxième composant électrique (2, 104), les composants adoptent une position de transmission et lorsque le premier composant électrique s'éloigne du deuxième composant électrique, les composants adoptent une position de repos.

7. Dispositif selon l'une quelconque des revendications précédentes, **caractérisé en ce que** le premier composant électrique (1, 102) et/ou le deuxième composant électrique (2, 104) sont réalisés pour émettre et/ou pour réceptionner des signaux électromagnétiques inductifs ou capacitifs, le premier composant électrique et/ou le deuxième composant électrique comprenant de préférence une bobine ou une plaque de condensateur.

8. Dispositif selon l'une quelconque des revendications précédentes, **caractérisé en ce que** le premier composant électrique (1, 102) et/ou le deuxième composant électrique (2, 104) comprend un circuit électronique qui est noyé dans une matière plastique, de préférence une matière polymère et qui est de préférence totalement enrobé de matière plastique.

9. Dispositif selon l'une quelconque des revendications précédentes, **caractérisé en ce que** les composants électriques (1, 102, 2, 104) sont réalisés de manière cunéiforme.

10. Dispositif selon l'une quelconque des revendications précédentes, **caractérisé en ce que** la cuve (3) comporte des pivots latéraux (7) destinés à recevoir une tige de pivot (8) conductrice d'électricité, logeant de manière rotative un ressort de rappel (5), le ressort de rappel (5) étant réalisé sous la forme d'un ressort à branches, pour l'alimentation énergétique, au moins l'un des composants électriques (1, 102, 2, 104) disposant de surfaces de contact latérales, qui par l'intermédiaire de la tige de pivot (8) sont reliées avec des contacts glissants (18) sur la face arrière du caisson encastrable (22).

11. Dispositif selon l'une quelconque des revendications précédentes, **caractérisé en ce que** pour le contrôle de la position du premier composant électrique par rapport au deuxième composant électrique, des moyens de contrôle de position qui sont réalisés de préférence sous la forme d'un émetteur optique, notamment d'un émetteur à infra-rouges (105) et d'un récepteur optique, notamment d'un récepteur à infra-rouges (106) sont prévus sur les composants électriques et/ou sur les structure mécaniques.

12. Dispositif selon l'une quelconque des revendications précédentes, **caractérisé en ce que** pour le contrôle de la position et de l'état, un émetteur radio, notamment un émetteur Bluetooth (107) et un récepteur radio, notamment un récepteur Bluetooth (108) sont prévus sur les structures mécaniques et/ou sur les composants électriques.

13. Dispositif selon l'une quelconque des revendications précédentes, **caractérisé en ce que** sur les structures mécaniques et/ou sur les composants électriques est prévue une réserve d'énergie, est prévu notamment un accumulateur d'énergie électrique (9), destiné à assurer l'alimentation électrique.

14. Dispositif de fermeture électrique, **caractérisé en ce que** le dispositif de fermeture comprend au moins un dispositif selon l'une quelconque des revendications précédentes.

15. Dispositif de fermeture électrique selon la revendication 14, **caractérisé en ce que** des moyens de manoeuvre sont prévus qui sont réalisés de telle sorte que dans une position initiale, les composants électriques soient escamotés dans un boîtier et lors de l'approche des composants électriques, ils se déploient sous l'effet des moyens de manoeuvre et s'orientent les uns par rapport aux autres, ce qui assure une réduction de l'écart entre les composants électriques et de préférence un premier composant électrique étant susceptible d'être relié avec un système d'alimentation (10) et un deuxième composant électrique étant susceptible d'être relié avec un système consommateur (11).
